# FASCICULE DE BREVET EUROPEEN

(11) **EP 1 538 080 B1**
(45) Date de publication et mention de la délivrance du brevet: **21.06.2006**
(21) Numéro de dépôt: 04106154.0
(22) Date de dépôt: 29.11.2004
(51) Int. Cl.: B64D 27/26

(54) **Dispositiv d'accrochage d'un turbopropulseur sous une voilure d'aeronef**
Aufhängung eines Triebwerks unter einer Flugzeugflügel
Suspension device for an engine under an aircraft wing

(30) Priorité: 01.12.2003 FR 0350946
(43) Date de publication de la demande: 08.06.2005
(73) Titulaire: AIRBUS France, 31060 Toulouse (FR)
(72) Inventeur: Machado, Stéphane, 31240, Villeneuve-Tolosane (FR); Cassagne, Jérôme, 31000, TOULOUSE (FR); Del Blanco, Anthony, 31300, TOULOUSE (FR); Martin, Yvon, 31590, Bonrepos Riquet (FR); Chambreuil, Arnaud, 31620, Labastide Saint Sernin (FR)
(74) Mandataire: Poulin, Gérard

(56) Documents cités:
- EP-A- 0 437 868
- US-A- 6 095 456
- US-A- 6 123 293
- US-A- 6 126 110

## Description

### DOMAINE TECHNIQUE

La présente invention se rapporte à un dispositif apte à assurer l'accrochage ou la suspension d'un turbopropulseur sous une voilure d'aéronef.

Un tel dispositif peut être utilisé sur tout type d'aéronef comportant des turbopropulseurs suspendus à sa voilure. A cet égard, il est particulièrement adapté pour équiper des aéronefs munis de turbopropulseurs susceptibles de fournir une puissance fortement élevée, pouvant dépasser les 10000 chevaux.

### ETAT DE LA TECHNIQUE ANTERIEURE

Sur les aéronefs existants, les moteurs sont suspendus au-dessous ou montés au-dessus de la voilure par des dispositifs d'accrochage complexes, également appelés « EMS » (de l'anglais « Engine Mounting Structure »).

Ces dispositifs sont notamment conçus pour permettre la transmission à la voilure des efforts statiques et dynamiques engendrés par les moteurs, tels que le poids, la poussée, ou encore les différents efforts dynamiques.

Dans le cas particulier d'un turbopropulseur, trois critères principaux sont pris en compte pour effectuer la conception du dispositif d'accrochage associé, à savoir la reprise du couple moteur, la masse de ce dispositif, et enfin la limitation du déplacement de la tuyère du turbopropulseur par rapport au dispositif d'accrochage.

Dans l'art antérieur, pour suspendre un turbopropulseur sous une voilure d'aéronef, il est classiquement proposé un dispositif d'accrochage comportant une structure rigide pourvue d'un caisson sous-aile arrière, ainsi que d'un ou plusieurs tronçons rigides avant disposés successivement vers l'avant selon la direction longitudinale du moteur. A titre d'exemple illustratif, dans ce type de solution dite hyperstatique, le dispositif peut comprendre deux tronçons rigides avant.

Dans cette configuration, chaque tronçon rigide avant comporte deux cadres transversaux espacés l'un de l'autre, et reliés entre-eux par une pluralité de bielles, celles-ci formant alors conjointement avec les cadres transversaux une structure dite « structure en treillis ».

Cette solution s'est en effet avérée satisfaisante dans le cas d'un dispositif d'accrochage destiné à suspendre un turbopropulseur de puissance normale, notamment en raison de sa capacité à reprendre le couple moteur engendré durant le fonctionnement du turbopropulseur associé.

Néanmoins, le développement récent des aéronefs a notamment conduit à l'emploi de turbopropulseurs de puissances extrêmement élevées par rapport à celles rencontrées jusqu'à présent, ces puissances pouvant effectivement être supérieures à 10000 chevaux, voire même dépasser 13000 chevaux.

Or pour de telles puissances, des études effectuées ont démontré qu'en tenant compte de la limite technologique de faisabilité des bielles pour une structure en treillis classique, ce type de structure ne permettait pas de reprendre intégralement le couple moteur généré, pouvant s'élever au-delà de 230000 N.m.

### EXPOSÉ DE L'INVENTION

L'invention a donc pour but de proposer un dispositif d'accrochage d'un turbopropulseur sous une voilure d'aéronef, ce dispositif remédiant au moins partiellement aux inconvénients mentionnés ci-dessus relatifs aux réalisations de l'art antérieur.

En particulier, le but de l'invention est de présenter un dispositif d'accrochage pour turbopropulseur de puissance élevée, capable de satisfaire les exigences relatives à la reprise du couple moteur généré durant le fonctionnement du turbopropulseur, ainsi qu'à la masse de ce dispositif et à la limitation du déplacement de la tuyère de ce turbopropulseur par rapport au dispositif d'accrochage.

Pour ce faire, l'invention a pour objet un dispositif d'accrochage d'un turbopropulseur sous une voilure d'aéronef, le dispositif comportant une structure rigide pourvue d'un caisson sous-aile arrière ainsi que d'au moins un tronçon rigide avant, chaque tronçon rigide avant comportant notamment deux cadres transversaux espacés l'un de l'autre. Selon l'invention, au moins un tronçon rigide avant de la structure rigide comprend en outre au moins un caisson avant supérieur reliant une partie supérieure des deux cadres transversaux du tronçon rigide avant.

Avantageusement, il a été remarqué que la mise en place d'un tel caisson avant entre la partie supérieure de deux cadres transversaux permettait de reprendre relativement aisément le couple moteur généré par un turbopropulseur de puissance élevée, par exemple supérieure à 13000 chevaux, contrairement aux solutions à structure en treillis antérieurement proposées.

Par ailleurs, le dispositif d'accrochage selon l'invention est avantageux en ce sens que sa conception lui permet également de satisfaire les critères de masse et de limitation du déplacement de la tuyère du moteur.

En outre, il est noté que la faculté de reprendre aisément l'intégralité du couple moteur est notamment procurée par la possibilité de concevoir le dispositif de sorte que le/les caissons avant supérieurs ainsi que le caisson sous-aile arrière forment conjointement un ensemble disposant sensiblement d'une continuité géométrique, assurant ainsi une continuité dans la reprise des efforts transitant dans une partie haute du dispositif. Bien évidemment, cette continuité était impossible à obtenir avec les dispositifs de l'art antérieur, en raison du passage obligatoire des efforts entre la partie avant et la partie arrière de la structure rigide du dispositif, à savoir entre la structure en treillis et le caisson sous-aile.

D'autre part, des études effectuées ont permis de démontrer que la présence d'un caisson avant supérieur sur au moins un tronçon rigide permettait la reprise d'au moins 80% du couple moteur par les attaches avant disposées habituellement sur le réducteur du turbopropulseur. Bien entendu, cette reprise d'au moins 80% du couple a été atteinte avec un dispositif d'accrochage présentant une masse optimale.

Enfin, il est indiqué que la conception du dispositif d'accrochage selon l'invention est avantageusement largement adaptée pour autoriser une mise en place verticale du turbopropulseur sur ce même dispositif, cette mise en place pouvant alors être réalisée en amenant le turbopropulseur par dessous, et en le faisant monter verticalement jusqu'au dispositif d'accrochage maintenu fixement.

Selon un premier mode de réalisation préféré de la présente invention, au moins un tronçon rigide avant de la structure rigide comprend de plus au moins deux bielles latérales agencées de part et d'autre du caisson avant supérieur, ces bielles reliant les deux cadres transversaux du tronçon rigide avant.

Cette configuration hybride comportant à la fois au moins un caisson avant supérieur et une pluralité de bielles latérales, du type de celles utilisées dans une structure en treillis classique, permet une très bonne reprise du couple moteur, dans la mesure où celui-ci est alors en plus partiellement absorbé par les bielles latérales prévues à cet effet. De façon avantageuse, la présence des bielles latérales en quantité restreinte ne provoque pas d'augmentation significative de la masse globale du dispositif d'accrochage, et autorise une accessibilité satisfaisante au turbopropulseur, notamment en vu d'y monter des équipements classiques.

Dans ce premier mode de réalisation préféré de la présente invention, les bielles latérales sont indifféremment articulées sur des ferrures solidaires des cadres transversaux, ou bien encastrées dans ces mêmes cadres transversaux.

A titre d'exemple indicatif, au moins un tronçon rigide avant de la structure rigide, et de préférence chacun d'entre-eux lorsqu'ils sont prévus dans un nombre supérieur ou égal à deux, comprend uniquement quatre bielles latérales agencées de part et d'autre du caisson avant supérieur. Naturellement, ces bielles étant notamment destinées à reprendre le couple moteur, elles sont donc préférentiellement agencées de manière symétrique par rapport à un plan vertical passant par l'axe longitudinal du turbopropulseur.

Selon un second mode de réalisation préféré de la présente invention, au moins un tronçon rigide avant de la structure rigide comprend de plus au moins deux caissons avant latéraux agencés de part et d'autre du caisson avant supérieur, ces caissons avant latéraux reliant les deux cadres transversaux du tronçon rigide avant.

Cette autre configuration, dans laquelle au moins un tronçon rigide avant est réalisé de telle sorte que ses deux cadres transversaux sont exclusivement reliés par des caissons, permet une excellente reprise du couple moteur.

Toujours à titre d'exemple illustratif, au moins un tronçon rigide avant de la structure rigide, et de préférence chacun d'entre-eux lorsqu'ils sont prévus dans un nombre supérieur ou égal à deux, comprend uniquement deux caissons avant latéraux agencés de part et d'autre du caisson avant supérieur. Ici encore, les caissons avant latéraux étant notamment destinés à reprendre le couple moteur, ils sont donc préférentiellement agencés de manière symétrique par rapport à un plan vertical passant par l'axe longitudinal du turbopropulseur.

Pour les deux modes de réalisation préférés décrits ci-dessus, il est de préférence prévu que le dispositif, et plus spécifiquement sa structure rigide, comprend deux tronçons rigides avant disposant d'un cadre transversal intermédiaire commun.

En outre, chaque tronçon rigide avant peut comprendre un unique caisson avant supérieur reliant la partie supérieure des deux cadres transversaux de ce même tronçon rigide avant.

Par ailleurs et toujours de manière préférée, chaque caisson avant supérieur comporte un longeron inférieur, un longeron supérieur, deux flans latéraux, ainsi qu'une pluralité de nervures intérieures transversales reliant les longerons et les flans.

Enfin, on peut aussi prévoir que chaque caisson avant supérieur est réalisé en titane.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective de la structure rigide d'un dispositif d'accrochage d'un turbopropulseur, selon un premier mode de réalisation préféré de la présente invention ;
- la figure 2 représente une vue en coupe prise selon le plan P de la figure 1 ; et
- la figure 3 représente une vue en perspective de la structure rigide d'un dispositif d'accrochage d'un turbopropulseur, selon un second mode de réalisation préféré de la présente invention.

### EXPOSÉ DÉTAILLÉ DE MODES DE RÉALISATION PRÉFÉRÉS

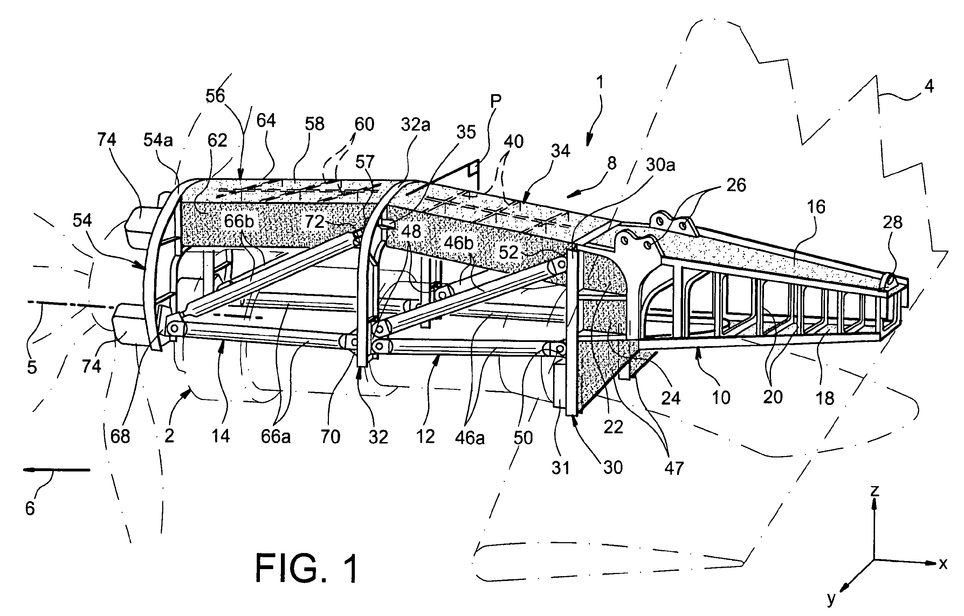

En référence à la figure 1, on voit un dispositif d'accrochage 1 selon un premier mode de réalisation préféré de la présente invention, ce dispositif 1 étant destiné à assurer la suspension d'un turbopropulseur 2 sous une aile d'aéronef représentée uniquement schématiquement pour des raisons évidentes de clarté, et désignée de façon générale par la référence numérique 4.

Dans toute la description qui va suivre, par convention, on appelle X la direction parallèle à un axe longitudinal 5 du turbopropulseur 2, Y la direction orientée transversalement par rapport à l'aéronef, et Z la direction verticale, ces trois directions étant orthogonales entre-elles. Il est précisé que l'axe longitudinal 5 du turbopropulseur 2 est à comprendre comme étant l'axe longitudinal du carter moteur, et non l'axe longitudinal de son hélice propulsive (non référencée).

D'autre part, les termes « avant » et « arrière » sont à considérer par rapport à une direction d'avancement de l'aéronef rencontrée suite à la poussée exercée par les turbopropulseurs 2, cette direction étant représentée schématiquement par la flèche 6.

Sur la figure 1, on peut voir que seule une structure rigide 8 du dispositif d'accrochage 1 a été représentée. Les autres éléments constitutifs non-représentés de ce dispositif 1, du type structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Dans ce premier mode de réalisation préféré de la présente invention, la structure rigide 8 comporte de l'arrière vers l'avant, successivement selon l'axe longitudinal 5 du turbopropulseur 2, un caisson sous-aile arrière 10, un premier tronçon avant supérieur 12, ainsi qu'un second tronçon avant supérieur 14.

Le caisson sous-aile arrière 10 est du même type que ceux rencontrés dans les dispositifs d'accrochage de turbopropulseur de l'art antérieur, et bien connus de l'homme du métier.

A titre d'exemple illustratif, ce caisson sous-aile 10 peut comprendre un longeron supérieur 16 ainsi qu'un longeron inférieur 18 s'étendant chacun sensiblement selon la direction X et sensiblement dans des plans XY, ces longerons 16 et 18 étant raccordés entre-eux par l'intermédiaire d'une pluralité de nervures transversales 20 espacées et agencées dans des plans YZ. Néanmoins, comme cela est représenté sur la figure 1, il est possible de prévoir que les longerons 16 et 18 sont situés dans des plans légèrement inclinés par rapport aux plans XY. En effet, le longeron supérieur 16 est agencé de manière à se rapprocher de l'axe longitudinal 5 du turbopropulseur 2 en s'étendant vers l'arrière, tandis que le longeron inférieur 18 est agencé de manière à s'éloigner de cet axe longitudinal 5 en s'étendant vers l'arrière.

Par ailleurs, il est noté que de manière classique et connu, les nervures transversales 20 prennent chacune la forme d'un rectangle.

En outre, le caisson sous-aile 10 comporte deux flans latéraux assurant la fermeture de celui-ci, chacun de ces deux flans étant éventuellement composé de plusieurs portions de flan planes et verticales. Sur la figure 1, seules deux portions de flan ont été représentées pour l'un des deux flans du caisson sous-aile 10, à savoir une portion avant supérieure 22 et une portion avant inférieur 24. Les portions arrière de ce flan ont été volontairement omises pour des raisons de clarté. Néanmoins, il est précisé à titre indicatif que les portions avant de flan 22 et 24 sont situées sensiblement dans un même plan et de préférence agencées de manière à se rapprocher de l'axe longitudinal 5 du turbopropulseur 2 en s'étendant vers l'avant, tandis que les portions arrière de flan sont également situées sensiblement dans un même plan, mais de préférence agencées de manière à se rapprocher de cet axe longitudinal 5 en s'étendant vers l'arrière.

De plus, comme cela est clairement visible sur la figure 1, il est précisé qu'au niveau d'une séparation entre les portions avant et arrière de chacun des deux flans, le caisson sous-aile arrière 10 présente une attache avant 26 destinée à assurer l'accrochage du dispositif 1 sous l'aile 4 de l'aéronef. Par exemple, chaque attache 26 prend la forme d'une ferrure s'étendant vers le haut dans un plan XZ depuis le longeron supérieur 16, au niveau d'une extrémité latérale de celui-ci.

A cet égard, une attache arrière 28 peut également être prévue pour assurer l'accrochage du dispositif 1 sous l'aile 4 conjointement avec les deux attaches avant 26, cette attache 28 prenant alors la forme d'une ferrure s'étendant vers le haut dans un plan YZ depuis le longeron supérieur 16, au niveau d'une extrémité arrière de celui-ci.

A l'avant, le caisson sous-aile 10 peut être obturé par un premier cadre transversal 30 situé dans un plan YZ, ce premier cadre transversal 30 étant de préférence en forme générale de U retourné, et faisant également partie intégrante du premier tronçon rigide avant 12.

A titre indicatif, le premier cadre transversal 30 porte une attache arrière destinée à permettre la fixation du turbopropulseur 2 sur le dispositif d'accrochage 1, et donc plus spécifiquement sur sa structure rigide 8. Cette attache arrière représentée schématiquement et indiquée par la référence numérique 31 sur la figure 1 est du type classique, à savoir identique ou similaires à celles rencontrées sur les dispositifs d'accrochage de l'art antérieur. Par conséquent, aucune description détaillée n'en sera faite.

Le premier tronçon rigide avant 12 comporte effectivement, en association avec le premier cadre transversal 30, un second cadre transversal 32 également situé dans un plan YZ et en forme de U retourné, ses deux branches se dirigeant vers le bas et étant situées en dessous de sa base. Naturellement, cette configuration en forme de U retourné a été adoptée de manière à ce que dans un état monté, le turbopropulseur 2 puisse être agencé entre les deux branches de chaque U.

De plus, ce tronçon rigide 12 dispose d'un premier caisson avant supérieur 34 reliant une partie supérieure des deux cadres transversaux 30 et 32, et plus spécifiquement les deux bases 30a et 32a des U retournés formés respectivement par ces mêmes cadres 30 et 32. Il est noté que dans ce premier mode de réalisation préféré, un seul caisson 34 relie la partie supérieure des deux cadres transversaux 30 et 32. Néanmoins, sans sortir du cadre de l'invention, il pourrait naturellement être prévu plusieurs caissons avant pour raccorder la partie supérieure de ces deux cadres 30 et 32.

Comme cela sera décrit de façon plus détaillée ci-après, le premier caisson avant supérieur 34 est sensiblement parallélépipédique et s'étend sensiblement selon la direction X. Pour des raisons d'encombrement du turbopropulseur 2, on peut néanmoins prévoir que le premier caisson avant supérieur 34 est agencé de manière à se rapprocher légèrement de l'axe longitudinal 5 en s'étendant vers l'arrière, comme cela est visible sur la figure 1.

Comme ce caisson 34 est spécialement conçu pour reprendre le couple moteur du turbopropulseur 2, il est de préférence prévu qu'un plan vertical (non représenté) passant par l'axe longitudinal 5 coupe le premier caisson avant supérieur 34 en deux parties identiques et symétriques par rapport à ce même plan. A ce titre, de manière plus générale, c'est d'ailleurs l'ensemble de la structure rigide 8 du dispositif d'accrochage 1 qui est conçue de manière à ce que le plan vertical passant par l'axe longitudinal 5 délimite deux parties de structure identiques et symétriques par rapport à ce plan vertical.

Le premier caisson avant supérieur 34 est de préférence maintenu solidairement sur les cadres transversaux 30 et 32 par l'intermédiaire de ferrures 35 sur lesquelles le caisson 34 est par exemple soudé, ces ferrures 35 (une seule d'entre-elles étant visible sur la figure 1 en raison de la représentation en perspective) étant elles-mêmes de préférence soudées sur les cadres 30 et 32 en forme de U, à proximité des intersections entre les branches et les bases associées 30a et 32a de ces U. Bien entendu, les ferrures 35 pourraient également être prévues d'un seul bloc avec les cadres transversaux 30 et 32, sans sortir du cadre de l'invention.

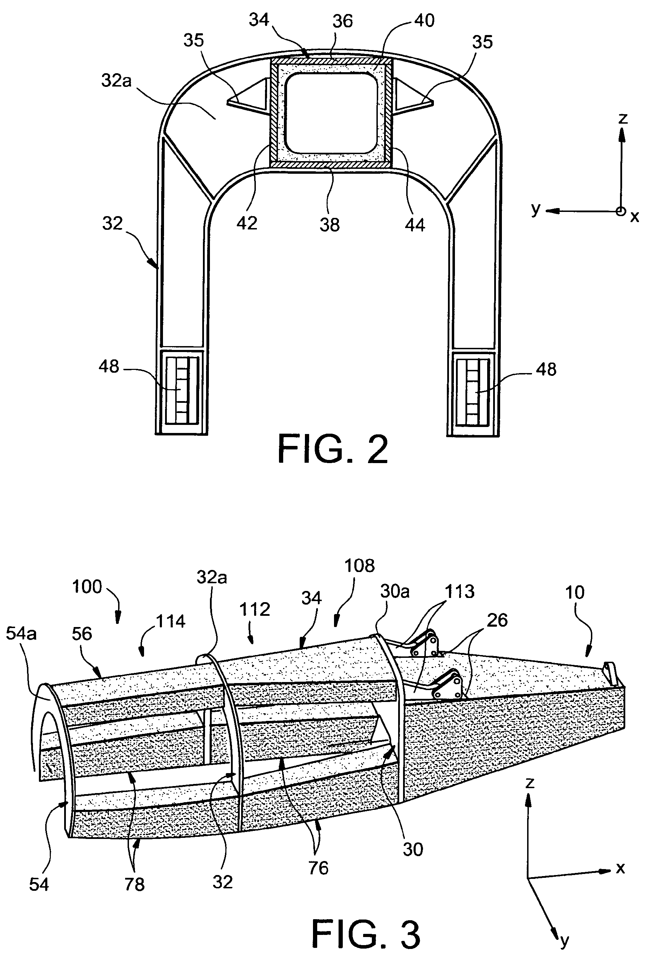

En référence à présent plus particulièrement à la figure 2, on voit que le premier caisson avant supérieur 34 en forme de parallélépipède comprend un longeron supérieur 36 ainsi qu'un longeron inférieur 38 s'étendant chacun dans des plans parallèles légèrement inclinés par rapport à des plans XY, à savoir agencés de manière à se rapprocher de l'axe longitudinal 5 du turbopropulseur 2 en s'étendant vers l'arrière.

Cependant, il serait également possible de prévoir que les longerons 36 et 38 s'étendent chacun sensiblement selon la direction X et sensiblement dans des plans XY, sans sortir du cadre de l'invention.

Les longerons 36 et 38 sont raccordés entre-eux par l'intermédiaire d'une pluralité de nervures transversales 40 espacées et agencées dans des plans YZ, ces nervures 40 prenant chacune la forme d'un rectangle.

En outre, le premier caisson avant supérieur 34 comporte deux flans latéraux 42 et 44 s'étendant dans des plans ZX, et étant également solidaires des nervures transversales 40 situées à l'intérieur d'un espace sensiblement parallélépipédique formé par les flans 42,44 et les longerons 36,38.

Enfin, il est précisé que le caisson 34 peut être obturé à ses extrémités avant et arrière par des parois verticales situées dans des plans YZ, ou tout simplement être obturé respectivement par les bases 30a et 32a des cadres transversaux 30 et 32 sur lesquels ce caisson 34 est monté.

De préférence, l'ensemble des éléments constitutifs du premier caisson avant supérieur 34 sont réalisés en titane, ou encore en carbone.

Comme on peut l'apercevoir sur la figure 1, pour assurer une continuité dans la reprise des efforts, on peut faire en sorte que les portions avant 22 et 24 de chacun des deux flans latéraux du caisson sous-aile arrière 10 se situent respectivement dans le prolongement des deux flans latéraux 42 et 44 du premier caisson avant 34. En outre, à titre d'exemple non représenté, on peut même prévoir pour chaque côté de la structure rigide 8 que les portions avant 22 et 24 d'une part, et le flan latéral 42,44 d'autre part, séparés par le premier cadre transversal 30, sont agencés sensiblement dans un même plan vertical.

De la même façon, toujours dans le but d'assurer une continuité dans la reprise des efforts, on peut faire en sorte que le longeron supérieur 16 du caisson sous-aile arrière 10 se situe respectivement dans le prolongement du longeron supérieur 36 (non représenté sur la figure 1) du premier caisson avant 34. Ici encore, toujours à titre d'exemple non représenté, on peut même prévoir que les longerons supérieurs 16 et 36, séparés par le premier cadre transversal 30, sont agencés sensiblement dans un même plan horizontal.

A nouveau en référence à la figure 1, on peut apercevoir que dans ce premier mode de réalisation préféré de la présente invention, les cadres transversaux 30 et 32 sont non seulement reliés par le premier caisson avant supérieur 34, mais également par l'intermédiaire de quatre bielles 46a,46b, le nombre de celles-ci n'étant bien évidemment en aucun cas limitatif.

Les quatre bielles 46a,46b sont agencées symétriquement par rapport au plan vertical passant par l'axe longitudinal 5 du turbopropulseur 2. Par conséquent, de chaque côté de la structure rigide 8 du dispositif 1, deux bielles 46a,46b assurent conjointement avec le premier caisson 34 la reprise du couple moteur.

Pour ce faire, de chaque côté de la structure rigide 8, une première bielle 46a est tout d'abord placée sensiblement selon la direction X, et reliée à une extrémité inférieure d'une branche du U formé par le second cadre 32. De plus, cette première bielle 46a peut être agencée de sorte qu'elle constitue un prolongement du longeron inférieur 18 du caisson sous-aile 10. En d'autres termes, l'extrémité arrière de cette bielle 46a se situe préférentiellement sensiblement dans le plan défini par le longeron inférieur 18. Comme cela apparaît clairement sur la figure 1, l'extrémité arrière de la bielle 46a et le longeron inférieur 18 sont raccordés, successivement de l'avant vers l'arrière, par le cadre transversal 30 et par un flan vertical 47 en forme d'équerre solidarisé au caisson sous-aile 10 ainsi qu'à la branche du U concernée, ce flan 47 se rapprochant de l'axe longitudinal 5 en allant vers l'arrière.

Par ailleurs, cette bielle 46a se situe de préférence dans un plan médian horizontal (non représenté) du turbopropulseur 2, passant par son axe longitudinal 5.

D'autre part, une seconde bielle 46b est également reliée à l'extrémité inférieure de la même branche du U formé par le second cadre 32, les deux bielles 46a et 46b étant en effet de préférence raccordées sur une même ferrure 48. Cependant, cette seconde bielle 46b n'est pas agencée selon la direction X, mais est raccordée à la base 30a du premier cadre transversal 30 en forme de U, ou à proximité de l'intersection entre la base et la branche concernée de ce U. La seconde bielle 46b est donc placée de manière à se rapprocher du plan vertical passant par l'axe longitudinal 5, en s'étendant simultanément vers l'arrière et vers le haut. Bien entendu, « vers le haut » signifie ici dans la direction Z, du turbopropulseur 2 vers le premier caisson avant supérieur 34.

Deux ferrures 50 et 52 sont également respectivement prévues sur le premier cadre transversal 30 pour assurer le montage des deux bielles 46a et 46b.

A ce titre, les quatre bielles 46a,46b disposées symétriquement peuvent être montées de façon articulée sur leurs ferrures respectives 48, 50 et 52, ou bien tout simplement soudées à ces dernières, afin d'obtenir des encastrements.

Enfin, il pourrait aussi être placé une/des bielles intermédiaires (non représentées) reliant de chaque côté de la structure rigide 8, la première et la seconde bielle 46a et 46b, dans le but évident de renforcer la tenue mécanique de cette structure rigide 8.

Comme indiqué précédemment, cette structure rigide 8 comporte également un second tronçon rigide avant 14, sensiblement similaire au premier tronçon rigide 12 qui vient d'être décrit.

Effectivement, le second tronçon rigide avant 14 comporte le second cadre transversal 32, ainsi qu'un troisième cadre transversal 54 également situé dans un plan YZ et en forme de U retourné, ses deux branches se dirigeant vers le bas et étant situées en dessous de sa base, comme cela est également le cas pour les deux autres cadres 30 et 32. Dans ces conditions, le troisième cadre 54 sensiblement aligné avec les deux autres étant situé à l'avant par rapport au second cadre 32, ce dernier joue alors un rôle de cadre intermédiaire appartenant conjointement aux deux tronçons rigides avant 12 et 14.

Ce tronçon rigide 14 dispose d'un second caisson avant supérieur 56 reliant une partie supérieure des deux cadres transversaux 32 et 54, et plus spécifiquement les deux bases 32a et 54a des U retournés formés respectivement par ces mêmes cadres 32 et 54.

Il est noté que dans ce premier mode de réalisation préféré, un seul caisson 56 relie la partie supérieure des deux cadres transversaux 32 et 54. Néanmoins, ici aussi, il pourrait être prévu plusieurs caissons avant pour raccorder la partie supérieure de ces deux cadres 32 et 54, sans sortir du cadre de l'invention.

De la même façon que pour le premier caisson avant supérieur 34, le second caisson avant supérieur 56 est sensiblement parallélépipédique et s'étend sensiblement selon la direction X. Pour des raisons d'encombrement du turbopropulseur 2, on peut néanmoins prévoir que le second caisson avant supérieur 56 est agencé de manière à se rapprocher légèrement de l'axe longitudinal 5 en s'étendant vers l'avant, comme cela est visible sur la figure 1.

Aussi, toujours de manière à ce que le caisson avant supérieur 56 puisse reprendre correctement le couple moteur du turbopropulseur 2, il est de préférence prévu que le plan vertical passant par l'axe longitudinal 5 coupe ce caisson 56 en deux parties identiques et symétriques par rapport à ce même plan.

Le second caisson avant supérieur 56 est de préférence maintenu solidairement sur les cadres transversaux 32 et 54 par l'intermédiaire de ferrures 57 sur lesquelles le caisson 56 est par exemple soudé, ces ferrures 35 (une seule d'entre-elles étant visible sur la figure 1 en raison de la représentation en perspective) étant elles-mêmes de préférence soudées sur les cadres 32 et 54 en forme de U, à proximité des intersections entre les branches et les bases associées 32a et 54a de ces U.

De façon identique à celle rencontrée pour le premier caisson 34, le second caisson avant supérieur 56 en forme de parallélépipède comprend un longeron supérieur 58 ainsi qu'un longeron inférieur (non visible sur la figure 1), chacun s'étendant dans des plans parallèles légèrement inclinés par rapport à des plans XY, à savoir agencés de manière à se rapprocher de l'axe longitudinal 5 en s'étendant vers l'avant.

Cependant, il serait également possible de prévoir que les longerons inférieur et supérieur 58 s'étendent chacun sensiblement selon la direction X et sensiblement dans des plans XY, sans sortir du cadre de l'invention.

Ces longerons sont par ailleurs raccordés entre-eux par l'intermédiaire d'une pluralité de nervures transversales 60 espacées et agencées dans des plans YZ, ces nervures transversales 60 prenant chacune la forme d'un rectangle.

En outre, le second caisson avant supérieur 56 comporte deux flans latéraux 62 et 64 s'étendant dans des plans ZX, et étant également solidaires des nervures transversales 60 situées à l'intérieur d'un espace sensiblement parallélépipédique formé par les flans 64,64 et les longerons 58.

Enfin, il est précisé que le caisson 56 peut être obturé à ses extrémités avant et arrière par des parois verticales situées dans des plans YZ, ou tout simplement être obturées respectivement par les bases 32a et 54a des cadres transversaux 32 et 54 sur lesquels ce caisson 56 est monté.

De préférence, l'ensemble des éléments constitutifs du second caisson avant supérieur 56 sont réalisés en titane, ou encore en carbone.

Comme on peut l'apercevoir sur la figure 1, pour assurer une continuité dans la reprise des efforts, on peut faire en sorte que les deux flans latéraux 42 et 44 du premier caisson avant 34 se situent respectivement dans le prolongement des deux flans latéraux 62 et 64 du second caisson avant 56. En outre, on peut même prévoir pour chaque côté de la structure rigide 8 que le flan latéral 62,64 et le flan latéral 42,44, séparés par le second cadre transversal 32, sont agencés sensiblement dans un même plan vertical.

De la même façon, toujours dans le but d'assurer une continuité dans la reprise des efforts, on peut faire en sorte que le longeron supérieur 36 (non représenté sur la figure 1) du premier caisson avant 34 se situe dans le prolongement de longeron supérieur 58 du second caisson avant supérieur 56. Ici encore, à titre d'exemple illustratif non représenté, on peut même prévoir que les longerons supérieurs 36 et 58, séparés par le second cadre transversal 32, sont agencés sensiblement dans un même plan horizontal. Bien entendu, cette possibilité est également applicable pour les deux longerons inférieurs des premier et second caisson 34 et 56, comme cela est représenté sur la figure 1.

Dans ce premier mode de réalisation préféré de la présente invention, les cadres transversaux 32 et 54 sont non seulement reliés par le premier caisson avant supérieur 34, mais également par l'intermédiaire de quatre bielles 66a,66b, disposées de la même façon que les bielles 46a,46b du premier tronçon 12.

Par conséquent, les quatre bielles 66a,66b sont agencées symétriquement par rapport au plan vertical passant par l'axe longitudinal 5, et il est prévu que de chaque côté de la structure rigide 8 du dispositif 1, deux bielles 66a,66b assurent conjointement avec le second caisson 56 la reprise du couple moteur.

Pour ce faire, de chaque côté de la structure rigide 8, une première bielle 66a est tout d'abord placée sensiblement selon la direction X, et reliée à une extrémité inférieure d'une branche du U formé par le troisième cadre 54. De plus, cette première bielle 66a peut être agencée dans le prolongement de la première bielle 46a du premier tronçon 12, comme cela apparaît clairement sur la figure 1.

D'autre part, une seconde bielle 66b est également reliée à l'extrémité inférieure de la même branche du U formé par le troisième cadre 54, les deux bielles 66a et 66b étant en effet de préférence raccordées sur une même ferrure 68. Cependant, cette seconde bielle 66b n'est pas agencée selon la direction X, mais est raccordée à la base 32a du second cadre transversal 32 en forme de U, ou à proximité de l'intersection entre la base et la branche concernée de ce U. En d'autres termes, la seconde bielle 66b est placée de manière à se rapprocher du plan vertical passant par l'axe longitudinal 5, en s'étendant simultanément vers l'arrière et vers le haut. Naturellement, « vers le haut » signifie ici dans la direction Z, du turbopropulseur 2 vers le second caisson avant supérieur 56.

Deux ferrures 70 et 72 sont également respectivement prévues sur le second cadre transversal 32 pour assurer le montage des extrémités arrière des deux bielles 66a et 66b.

De la même manière que pour le premier tronçon 12, les quatre bielles 66a,66b disposées symétriquement peuvent être montées de façon articulée sur leurs ferrures respectives 68, 70 et 72, ou bien tout simplement soudées à ces dernières, afin d'obtenir des encastrements.

Ici aussi, il pourrait être placé une/des bielles intermédiaires (non représentées) reliant de chaque côté de la structure rigide 8, la première et la seconde bielle 66a et 66b.

Toujours en référence à la figure 1, on voit que le troisième cadre transversal 54 est pourvu d'attaches avant 74 destinées à permettre la fixation du turbopropulseur 2 sur le dispositif d'accrochage 1, et donc plus spécifiquement sur sa structure rigide 8. A titre indicatif, les attaches avant 74 sont généralement réparties autour d'un réducteur du turbopropulseur 2.

Enfin, on peut concevoir la structure rigide 8 de sorte que les deux tronçons rigides avant sensiblement identiques 12 et 14, ainsi que le caisson sous-aile arrière 10, disposent chacun approximativement d'une même longueur longitudinale, celle-ci pouvant être de l'ordre de 1400 mm.

En référence à la figure 3, on voit un dispositif d'accrochage 100 selon un second mode de réalisation préféré de la présente invention, ce dispositif 100 étant destiné à assurer la suspension d'un turbopropulseur sous une aile d'aéronef (non représentés sur cette figure).

Il est tout d'abord précisé que le dispositif d'accrochage 100 présente une structure rigide 108 sensiblement similaire à la structure rigide 8 du dispositif d'accrochage 1 selon le premier mode de réalisation préféré de la présente invention. A cet égard, les éléments des figures 1 à 3 portant les mêmes références numériques correspondent à des éléments identiques ou similaires.

Ainsi, comme on peut l'apercevoir sur cette figure 3, la structure rigide 108 comporte de l'arrière vers l'avant, successivement selon l'axe longitudinal du turbopropulseur, un caisson sous-aile arrière 10 similaire à celui décrit ci-dessus, un premier tronçon rigide avant 112, ainsi qu'un second tronçon rigide avant 114.

De la même façon que pour le premier tronçon rigide avant 12 du premier mode de réalisation préféré, le premier tronçon rigide avant 112 comporte le premier cadre transversal 30, le second cadre transversal 32, et le premier caisson avant supérieur 34 reliant la partie supérieure 30a,32a des deux cadres 30 et 32. Il est précisé que le premier caisson avant supérieur 34 diffère légèrement de celui décrit dans le premier mode de réalisation préféré, dans la mesure où il dispose d'une forme légèrement trapézoïdale en vue de dessus, son extrémité arrière étant plus évasée que son extrémité avant. En effet, ses flans latéraux (non référencés) s'écartent du plan vertical passant par l'axe longitudinal du moteur en allant vers l'arrière, et peuvent alors être situés respectivement dans le prolongement de deux nervures verticales 113 sensiblement orientées selon la direction longitudinale X, ces deux nervures 113 établissant la jonction entre le cadre transversal 30 et les attaches avant 26. Bien entendu, chaque attache avant 26 et sa nervure 113 associée peuvent être réalisées d'un seul tenant.

Ainsi, la disposition spécifique susmentionnée est tout à fait adaptée pour procurer une très bonne transmission des efforts.

De plus, les cadres transversaux 30 et 32 sont non seulement reliés par le premier caisson avant supérieur 34, mais également par l'intermédiaire de deux caissons avant latéraux 76, le nombre de ceux-ci étant bien évidemment en aucun cas limitatif.

Les deux caissons avant latéraux 76 sont agencés symétriquement par rapport au plan vertical passant par l'axe longitudinal du turbopropulseur. Par conséquent, de chaque côté de la structure rigide 108 du dispositif 100, un unique caisson latéral 76 assure conjointement avec le premier caisson 34 la reprise du couple moteur.

Pour ce faire, de chaque côté de la structure rigide 108, le caisson latéral 76 de forme sensiblement parallélépipédique et de conception identique ou similaire à celle des caissons avant supérieurs 34 et 56 décrits ci-dessus, est placé sensiblement selon la direction X, et relié à une extrémité inférieure d'une branche du U formé par le second cadre 32, ainsi qu'à une extrémité inférieure d'une branche du U formé par le premier cadre 30.

De la même façon que précédemment, il est avantageux de prévoir une continuité géométrique aussi importante que possible entre les caissons avant latéraux 76 et le caisson sous-aile arrière 10, de manière à pouvoir reprendre du mieux possible le couple moteur du turbopropulseur. A cet égard, pour chaque caisson 76, la continuité géométrique peut notamment être obtenue en prévoyant qu'un flan latéral extérieur (non référencé) du caisson 76 concerné se trouve dans le prolongement d'un flan latéral vertical (non référencé) du caisson sous-aile 10, comme cela est clairement visible sur la figure 3. Il est précisé à titre indicatif que contrairement au caisson sous-aile arrière 10 du premier mode de réalisation préféré, le caisson 10 de la figure 3 présente de chaque côté un unique flan latéral vertical, se rapprochant de l'axe longitudinal du turbopropulseur en allant vers l'arrière.

De manière analogue, une telle continuité géométrique peut également être prévue entre les longerons inférieurs (non référencés) des caissons 10 et 76.

En outre, de la même façon que pour le second tronçon rigide avant 14 du premier mode de réalisation préféré, le second tronçon rigide avant 114 comporte le second cadre transversal 32, le troisième cadre transversal 54, et le second caisson avant supérieur 56 reliant la partie supérieure 32a,54a des deux cadres 32 et 54. Ces éléments étant identiques ou similaires à ceux décrits précédemment, ils ne seront par conséquent pas davantage décrits.

Les cadres transversaux 32 et 54 sont non seulement reliés par le second caisson avant supérieur 56, mais également par l'intermédiaire de deux caissons avant latéraux 78. En effet, les deux caissons avant latéraux 78 sont agencés symétriquement par rapport au plan vertical passant par l'axe longitudinal du turbopropulseur. Par conséquent, de chaque côté de la structure rigide 108 du dispositif 100, un unique caisson latéral 78 assure conjointement avec le second caisson 56 la reprise du couple moteur.

Pour ce faire et de façon identique à celle rencontrée dans le premier tronçon 112, de chaque côté de la structure rigide 108, le caisson latéral 78 de forme sensiblement parallélépipédique et de conception identique ou similaire à celle des caissons avant supérieurs 34 et 56 décrits précédemment, est placé sensiblement selon la direction X. D'autre part, il est relié à une extrémité inférieure d'une branche du U formé par le second cadre 32, ainsi qu'à une extrémité inférieure d'une branche du U formé par le troisième cadre 54.

Enfin, il est ici aussi très avantageux de prévoir une continuité géométrique aussi importante que possible entre les caissons avant latéraux 76 du premier tronçon 112 et les caissons avant latéraux 78 du second tronçon 114, toujours de manière à pouvoir reprendre du mieux possible le couple moteur du turbopropulseur. A titre d'exemple indicatif et comme cela est représenté sur la figure 3, la continuité géométrique entre les caissons latéraux 76 et 78 peut être facilement obtenue en prévoyant que leurs longerons supérieurs, leurs longerons inférieurs ainsi que leurs flans latéraux se trouvent respectivement dans le prolongement les uns des autres, et éventuellement dans des mêmes plans.

## Revendications

1. Dispositif d'accrochage (1,100) d'un turbopropulseur (2) sous une voilure (4) d'aéronef, ledit dispositif comportant une structure rigide (8,108) pourvue d'un caisson sous-aile arrière (10) ainsi que d'au moins un tronçon rigide avant (12,14,112,114), chaque tronçon rigide avant comportant notamment deux cadres transversaux (30,32,54) espacés l'un de l'autre, **caractérisé en ce qu'**au moins un tronçon rigide avant (12,14,112,114) de la structure rigide (8,108) comprend en outre au moins un caisson avant supérieur (34,56) reliant une partie supérieure (30a,32a,54a) des deux cadres transversaux (30,32,54) dudit tronçon rigide avant.

2. Dispositif d'accrochage (1) d'un turbopropulseur selon la revendication 1, **caractérisé en ce qu'**au moins un tronçon rigide avant (12,14) de la structure rigide (8) comprend de plus au moins deux bielles latérales (46a,46b,66a,66b) agencées de part et d'autre du caisson avant supérieur (34,56), lesdites au moins deux bielles (46a,46b,66a,66b) reliant les deux cadres transversaux (30,32,54) dudit tronçon rigide avant.

3. Dispositif d'accrochage (1) d'un turbopropulseur selon la revendication 2, **caractérisé en ce que** lesdites bielles latérales (46a,46b,66a,66b) sont articulées sur des ferrures (48,50,52,68,70,72) solidaires des cadres transversaux (30,32,54).

4. Dispositif d'accrochage (1) d'un turbopropulseur selon la revendication 2, **caractérisé en ce que** lesdites bielles latérales (46a,46b,66a,66b) sont encastrées dans les cadres transversaux (30, 32, 54).

5. Dispositif d'accrochage (1) d'un turbopropulseur selon l'une quelconque des revendications 2 à 4, **caractérisé en ce qu'**au moins un tronçon rigide avant (12,14) de la structure rigide (8) comprend uniquement quatre bielles latérales (46a,46b,66a,66b) agencées de part et d'autre du caisson avant supérieur (34,56).

6. Dispositif d'accrochage (100) d'un turbopropulseur selon la revendication 1, **caractérisé en ce qu'**au moins un tronçon rigide avant (112, 114) de la structure rigide (108) comprend de plus au moins deux caissons avant latéraux (76,78) agencés de part et d'autre du caisson avant supérieur (34,56), lesdits au moins deux caissons avant latéraux (76,78) reliant les deux cadres transversaux (30,32,54) dudit tronçon rigide avant.

7. Dispositif d'accrochage (100) d'un turbopropulseur selon la revendication 6, **caractérisé en ce qu'**au moins un tronçon rigide avant (112, 114) de la structure rigide (108) comprend uniquement deux caissons avant latéraux (76,78) agencés de part et d'autre du caisson avant supérieur (34,56).

8. Dispositif d'accrochage (1,100) d'un turbopropulseur selon l'une quelconque des revendications précédentes, **caractérisé en ce qu'**il comprend deux tronçons rigides avant (12,14,112,114) disposant d'un cadre transversal intermédiaire commun (32).

9. Dispositif d'accrochage (1,100) d'un turbopropulseur selon l'une quelconque des revendications précédentes, **caractérisé en ce que** chaque tronçon rigide avant (12,14,112,114) comporte un unique caisson avant supérieur (34,56) reliant la partie supérieure (30a,32a,54a) des deux cadres transversaux (30,32,54) dudit tronçon rigide avant.

10. Dispositif d'accrochage (1,100) d'un turbopropulseur selon l'une quelconque des revendications précédentes, **caractérisé en ce que** chaque caisson avant supérieur (34,56) comporte un longeron inférieur (38), un longeron supérieur (36,58), deux flans latéraux (42,44,62,64), ainsi qu'une pluralité de nervures intérieures transversales (40,60) reliant lesdits longerons ainsi que lesdits flans latéraux.

11. Dispositif d'accrochage (1,100) d'un turbopropulseur selon l'une quelconque des revendications précédentes, **caractérisé en ce que** chaque caisson avant supérieur (34,56) est réalisé en titane.

## Claims

1. Mounting structure (1, 100) for mounting a turboprop (2) under an aircraft wing (4), said structure comprising a rigid structure (8, 108) provided with an aft under-wing box (10), and at least one forward rigid segment (12, 14, 112, 114), each forward rigid segment having two transverse frames (30, 32, 54) at a spacing from each other, **characterised in that** at least one forward rigid segment (12, 14, 112, 114) of the rigid structure (8, 108) also comprises at least one forward upper box (34, 56) connecting a top part (30a, 32a, 54a) of the two transverse frames (30, 32, 54) of said forward rigid segment.

2. Mounting structure (1) according to claim 1 for mounting a turboprop, **characterised in that** at least one forward rigid segment (12, 14) of the rigid structure (8) also comprises at least two connecting rods (46a, 46b, 66a, 66b) arranged on each side of the upper forward box (34, 56), said at least two connecting rods (46a, 46b, 66a, 66b) connecting the two transverse frames (30, 32, 54) of said forward rigid segment.

3. Mounting structure (1) according to claim 2 for mounting a turboprop, **characterised in that** said lateral connecting rods (46a, 46b, 66a, 66b) are articulated on fittings (48, 50, 52, 68, 70, 72) fixed to the transverse frames (30, 32, 54).

4. Mounting structure (1) according to claim 2 for mounting a turboprop, **characterised in that** said lateral connecting rods (46a, 46b, 66a, 66b) are embedded in the transverse frames (30, 32, 54).

5. Mounting structure (1) according to any one of claims 2 to 4 for mounting a turboprop, **characterised in that** at least one forward rigid segment (12, 14) of the rigid structure (8) includes only four lateral connecting rods (46a, 46b, 66a, 66b) arranged on each side of the forward upper box (34, 56).

6. Mounting structure (100) according to claim 1 for mounting a turboprop, **characterised in that** at least one forward rigid segment (112, 114) of the rigid structure (108) also comprises at least two forward side boxes (76, 78) arranged on each side of the forward upper box (34, 56), said at least two forward side boxes (76, 78) connecting the two transverse frames (30, 32, 54) of said forward rigid segment.

7. Mounting structure (100) according to claim 6 for mounting a turboprop, **characterised in that** at least one forward rigid segment (112, 114) of the rigid structure (108) includes only two forward side boxes (76, 78) arranged on each side of the forward upper box (34, 56).

8. Mounting structure (1, 100) according to any one of the above claims for mounting a turboprop, **characterised in that** it comprises two forward rigid segments (12, 14, 112, 114) with a common intermediate transverse frame (32).

9. Mounting structure (1, 100) according to any one of the above claims for mounting a turboprop, **characterised in that** each forward rigid segment (12, 14, 112, 114) comprises a single forward upper box (34, 56) connecting the upper part (30a, 32a, 54a) of the two transverse frames (30, 32, 54) of said forward rigid segment.

10. Mounting structure (1, 100) according to any one of the above claims for mounting a turboprop, **characterised in that** each forward upper box (34, 56) comprises a lower stringer (38), an upper stringer (36, 58), two side plates (42, 44, 62, 64), and a plurality of transverse inner ribs (40, 60) connecting said stringers and said side plates.

11. Mounting structure (1, 100) according to any one of the above claims for mounting a turboprop, **characterised in that** each forward upper box (34, 56) is made from titanium.

## Patentansprüche

1. Vorrichtung (1,100) zur Aufhängung eines Turbopropeller-Triebwerks bzw. Turboprop-Triebwerks (2) unter einem Tragwerk (4) eines Luftfahrzeugs, wobei die Vorrichtung eine starre Struktur (8,108) aufweist, die mit einem unterflügeligen hinteren Gehäusekasten (10) sowie mit mindestens einem starren vorderen Teilstück (12,14,112,114) versehen ist, wobei jedes starre vordere Teilstück im einzelnen zwei voneinander beabstandete Querrahmen (30,32,54) umfasst, **dadurch gekennzeichnet, dass** mindestens ein starres vorderes Teilstück (12,14,112,114) der starren Struktur (8,108) außerdem mindestens einen vorderen oberen Gehäusekasten (34,56) aufweist, welcher einen oberen Abschnitt (30a,32a,54a) der beiden Querrahmen (30,32,54) des starren vorderen Teilstücks verbindet.

2. Aufhängungsvorrichtung (1) eines Turboprop-Triebwerks nach Anspruch 1, **dadurch gekennzeichnet, dass** mindestens ein starres vorderes Teilstück (12,14) der starren Struktur (8) außerdem mindestens zwei laterale Gelenkstangen (46a,46b,66a,66b) umfasst, die auf beiden Seiten des vorderen oberen Gehäusekastens (34,56) angeordnet sind, wobei die mindestens zwei Gelenkstangen (46a,46b,66a,66b) die beiden Querrahmen (30,32,54) des starren vorderen Teilstücks verbinden.

3. Aufhängungsvorrichtung (1) eines Turboprop-Triebwerks nach Anspruch 2, **dadurch gekennzeichnet, dass** die lateralen Gelenkstangen (46a,46b,66a,66b) mit Beschlagteilen (48,50,52,68,70,72) gelenkig verbunden sind, welche mit den Querrahmen (30,32,54) einstückig bzw. fest verbunden sind.

4. Aufhängungsvorrichtung (1) eines Turboprop-Triebwerks nach Anspruch 2, **dadurch gekennzeichnet, dass** die lateralen Gelenkstangen (46a,46b,66a,66b) in die Querrahmen (30,32,54) eingelassen sind.

5. Aufhängungsvorrichtung (1) eines Turboprop-Triebwerks nach einem der Ansürüche 2 bis 4, **dadurch gekennzeichnet, dass** mindestens ein starres vorderes Teilstück (12,14) der starren Struktur (8) lediglich vier laterale Gelenkstangen (46a,46b,66a,66b) aufweist, die auf beiden Seiten des vorderen oberen Gehäusekastens (34,56) angeordnet sind.

6. Aufhängungsvorrichtung (100) eines Turboprop-Triebwerks nach Anspruch 1, **dadurch gekennzeichnet, dass** mindestens ein starres vorderes Teilstück (112,114) der starren Struktur (108) außerdem mindestens zwei vordere laterale Gehäusekästen (76,78) umfasst, die auf beiden Seiten des vorderen oberen Gehäusekastens (34,56) angeordnet sind, wobei die mindestens zwei vorderen lateralen Gehäusekästen (76,78) die beiden Querrahmen (30,32,54) des starren vorderen Teilstücks verbinden.

7. Aufhängungsvorrichtung (100) eines Turboprop-Triebwerks nach Anspruch 6, **dadurch gekennzeichnet, dass** mindestens ein starres vorderes Teilstück (112,114) der starren Struktur (108) nur zwei vordere laterale Gehäusekästen (76,78) umfasst, die auf beiden Seiten des vorderen oberen Gehäusekastens (34,56) angeordnet sind.

8. Aufhängungsvorrichtung (1,100) eines Turbo-Proptriebswerks nach einem der vorangehenden Ansprüche, **dadurch gekennzeichnet, dass** sie zwei starre vordere Teilstücke (12,14,112,114) umfasst, die über einen gemeinsamen Zwischen-Querrahmen (32) verfügen.

9. Aufhängungsvorrichtung (1,100) eines Turbo-Proptriebswerks nach einem der vorangehenden Ansprüche, **dadurch gekennzeichnet, dass** jedes starre vordere Teilstück (12,14,112,114) einen einzigen vorderen oberen Gehäusekasten (34,56) umfasst, welcher den oberen Abschnitt (30a,32a,54a) der beiden Querrahmen (30,32,54) des starren vorderen Teilstücks verbindet.

10. Aufhängungsvorrichtung (1,100) eines Turbo-Proptriebswerks nach einem der vorangehenden Ansprüche, **dadurch gekennzeichnet, dass** jeder vordere obere Gehäusekasten (34,56) einen unteren Längsträger (38), einen oberen Längsträger (36,58), zwei laterale Platten (42,44,62;64) sowie mehrere transversale innere Rippen (40,60), die die Längsträger sowie die lateralen Platten verbinden, umfasst.

11. Aufhängungsvorrichtung (1,100) eines Turbo-Proptriebswerks nach einem der vorangehenden Ansprüche, **dadurch gekennzeichnet, dass** jeder vordere obere Gehäusekasten (34,56) aus Titan hergestellt ist.
